# EUROPEAN PATENT APPLICATION

(11) **EP 1 811 140 A2**
(43) Date of publication of application: **25.07.2007**
(21) Application number: 07250154.7
(22) Date of filing: 16.01.2007
(51) Int. Cl.: F01L 3/20, F01L 9/04, F02B 25/14, F02B 41/04

(54) **Improvements in internal combustion engines**

(30) Priority: 20.01.2006 GB 0601208
(71) Applicant: Hall, Keith Gordon, 80 Highfield Lane Maidenhead, Berkshire SL6 3PF (GB)
(72) Inventor: Hall, Keith Gordon, 80 Highfield Lane Maidenhead, Berkshire SL6 3PF (GB)
(74) Representative: Prentice, Raymond Roy

(57) **Abstract**

An internal combustion engine has a disc drive mechanism comprising a crankshaft assembly (1,2), a disc pair (3,4) and a piston (5). An intake valve is provided leading to the crankcase chamber (10) to permit the supply of air to said chamber, a passage (14) leads from the crankcase chamber (10) to the cylinder (15) of the engine and a one-way valve (11,12) is provided in the passage (14) to permit compressed air to pass from the crankcase chamber (10) to the cylinder (15) and to prevent the flow of air through the passage (14) in the opposite direction. The engine may further be provided with a separate lubricant reservoir, outside the crankcase, and arranged to supply lubricant to the engine for both lubricating and cooling purposes.

## Description

This invention relates to improvements in internal combustion engines and is particularly concerned with an engine having a disc drive mechanism in place of connecting rods.

The engine forming the subject of European Patent Specification No 0493135 was developed to exploit crankcase compression in order to pressure charge one or more engine intake passages for 2-stroke and 4-stroke engine cycles. Multiple intake streams could also be used to improve control of in-cylinder air motion and hence extend the lean bum capability of spark ignition engines, particularly when unthrottled.

The disc-drive engine described in European Patent Specification No 0493135 has, by nature of its construction, a very small crankcase volume compared to a conventional connecting rod piston engine. As a result the disc drive engine has inherent potential to boost engine performance by means of crankcase compression.

The present invention aims to provide an improved internal combustion engine in which compressed air in the crankcase can be used to feed an intake passage to the engine.

According to the invention, there is provided an internal combustion engine having a disc drive mechanism in which an intake valve is provided leading to the crankcase chamber to permit the supply of air to said chamber, a passage leads from the crankcase chamber to the cylinder(s) of the engine and a one-way valve is provided in said passage to permit compressed air to pass from the crankcase chamber to the cylinder(s) and to prevent the flow of air through said passage in the opposite direction.

According to one embodiment of the invention, the engine has more than one cylinder and the passage leads from the crankcase chamber to all of the cylinders. According to an alternative embodiment, the engine has more that one cylinder and a separate passage is provided leading from the crankcase chamber to each cylinder, a respective one-way valve being provided in each of said passages.

Preferably, the or each cylinder is provided with diagonally spaced engine exhaust valves with tangential port orientation relative to the cylinder axis to create uni-directional macro-swirl in the cylinder about the cylinder axis.

It is also preferred that the or each cylinder be provided with diagonally spaced engine intake valves in which one or more has a predominantly tangentially oriented port that compliments the in-cylinder uni-directional macro-swirl generated by the exhaust ports.

Desirably, the or each cylinder has multiple intake ports in which the crankcase fed port comprising also the injected fuel is orientated to deliver the air/fuel mixture to the central zone of the cylinder for combustion.

According to an embodiment of the invention, the or each cylinder has diagonally positioned exhaust valves and diagonally positioned inlet valves with tangentially orientated ports that all create uni-directional in-chamber air motion predominantly around the cylinder axis.

The engine is preferably arranged to have delayed opening of the crankcase feed intake valve in the induction process in order to avoid unburnt fuel from entering the exhaust system.

Preferably, means are provided for storing engine lubricant outside the crankcase and a further one-way valve is provided to create a differential head relative to the sump oil level. Such an external store of the engine lubricant facilitates its use also as an engine coolant.

The means for storing engine lubricant preferably comprise a reservoir having a differential head of lubricant to that of the engine.

According to a preferred embodiment of the invention, the reservoir is connected by a first passage to the intake of a coolant pump which is effective to pump lubricant to the engine for cooling purposes, the lubricant then being pumped to a heat exchanger connected to the reservoir by a second passage.

The reservoir is preferably connected by a further passage to a lubricant pump which is effective to pump lubricant to moving parts of the engine, said lubricant being returned by gravity to the sump of the engine.

The sump is preferably connected to the reservoir by a return passage, a spring-loaded return valve being provided in said passage and said valve being arranged to be opened by pressure in the crankcase.

According to another embodiment of the invention, the engine has crankcase intake and outlet reed valve assemblies that are stacked with provision for an enclosed valve cavity to be connected to the crankcase volume via a tract that may incorporate an air/oil separator.

The 4-stroke disc drive engine, in particular, has the capability for crankcase compression to supply all the intake charge. Each V2 module displaces 70.7% of the cylinder swept volume per revolution. Hence, in the two revolutions of the 4-stroke cycle required for one induction stroke, 141.4% of the cylinder volume is swept by the crankcase and may be used to supercharge the engine.

The 2-stroke disc drive engine has an induction stroke each revolution so only 70.7% of cylinder swept volume is available via crankcase compression. Hence, the 2-stroke benefits significantly from an additional source of induction air. By way of example, the invention is described for the case of dual air supply for either 4-stroke or 2-stroke operating cycles.

The advantage of using two streams of air is to better control charge mixing in order to extend the lean bum capability of spark ignition engines and reduce the need for intake throttling. Moreover, to keep one air stream devoid of fuel during initial scavenging in order to minimise the potential for unburnt fuel to enter the exhaust system.

The invention will now be described in detail, by way of example, with reference to the drawings, in which:-
Figure 1 shows a section of a disc drive engine including the crankcase charging system according to one embodiment of the invention;
Figure 2 shows the layout principle of the cylinder head ports to create rotational swirl for a port injection engine;
Figure 3 shows the layout principle of the cylinder head ports to create rotational swirl for a direct fuel injection engine;
Figure 4 shows an engine coolant and lubrication system using a common fluid; and
Figure 5 shows a stack assembly of the crankcase intake and outlet reed valves that minimises oil entrapment in the charge air.

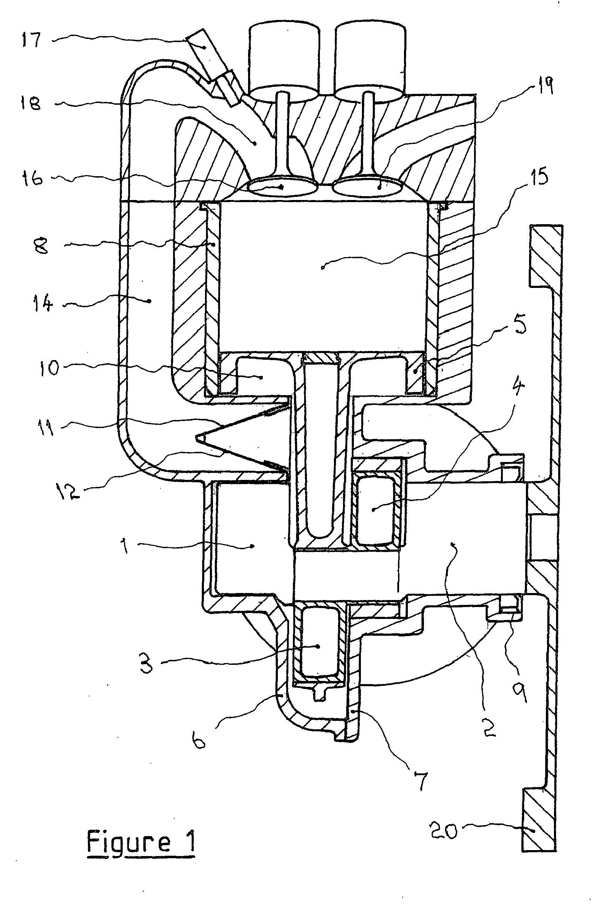

By way of example, a 4-valve cylinder head configuration is described in which tangentially orientated exhaust ports generate outflow through two diagonally located exhaust valves to create predominantly unidirectional swirl in the cylinder. The two intake valves are similarly diagonally disposed. Figure 1 shows a section through a two cylinder disc drive engine comprising a crankshaft assembly 1 and 2, a disc pair 3 and 4 and a piston 5. Replicated details of the second cylinder are not shown or numbered. Crankcase halves 6 and 7 house the aforementioned parts in addition to a cylinder 8 and a crankshaft seal 9. A crankcase chamber 10 has an intake one-way valve (not shown) and outlet one-way valves in the form of flap valves 11,12 feeding an intake passage 14 connected to a cylinder 15 via an intake valve 16. The pressurised intake passage may also have a fuel injector 17. A pressurised intake port 18 is directed towards the central zone of the cylinder in order to provide mixture for ignition purposes. An exhaust valve 19 and a second exhaust valve (not shown) are located either side of the intake valve 16 and orientated with a tangential bias to initiate rotational swirl about the axis of the cylinder during scavenging. A second intake valve (not shown), has a port orientated with a tangential bias that complements the direction of rotational swirl in the cylinder. This intake valve is located diagonally opposite the valve 16 and admits external air to the cylinder. Typically, the intake valve supplying atmospheric air would lead the induction process to initiate scavenging and the valve in the pressurised intake port would lag in order to minimise unburnt fuel entering the exhaust system. A flywheel 20 is attached to the output end of the crankshaft 2.

The second cylinder may replicate the crankcase outlet valves and intake passage of the cylinder assembly described, or the intake passage 14 may include additional volume that feeds crankcase air to the intake passage of the second cylinder.

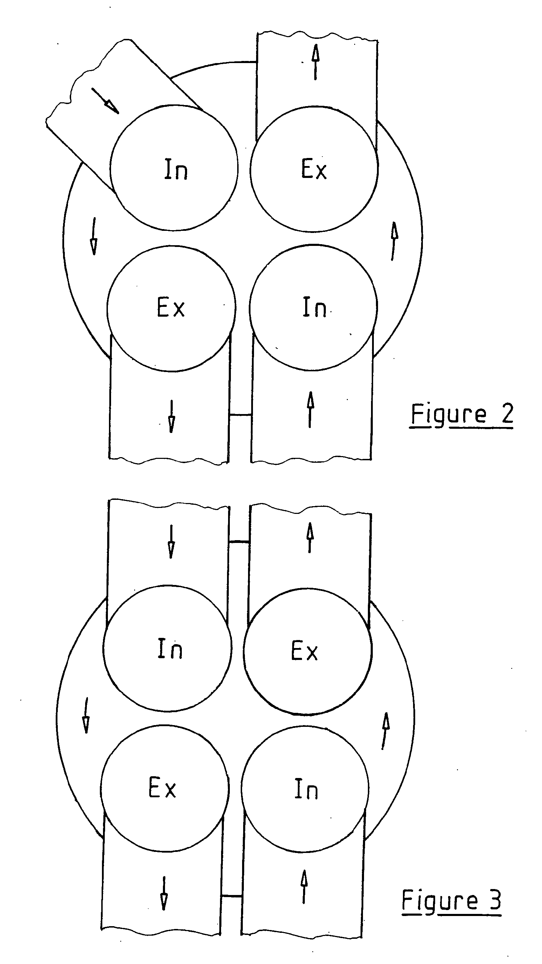

Figure 2 shows diagrammatically the layout of the cylinder head ports to create rotational swirl around the cylinder axis whilst admitting mixture to the centre core of the combustion chamber in a downdraught direction as described in Figure 1. In practice the tangential ports also produce an additional tumbling motion.

Figure 3 shows a version of the port layout in which direct fuel injection into the cylinder is employed and all the ports are orientated to produce rotational swirl about the cylinder axis.

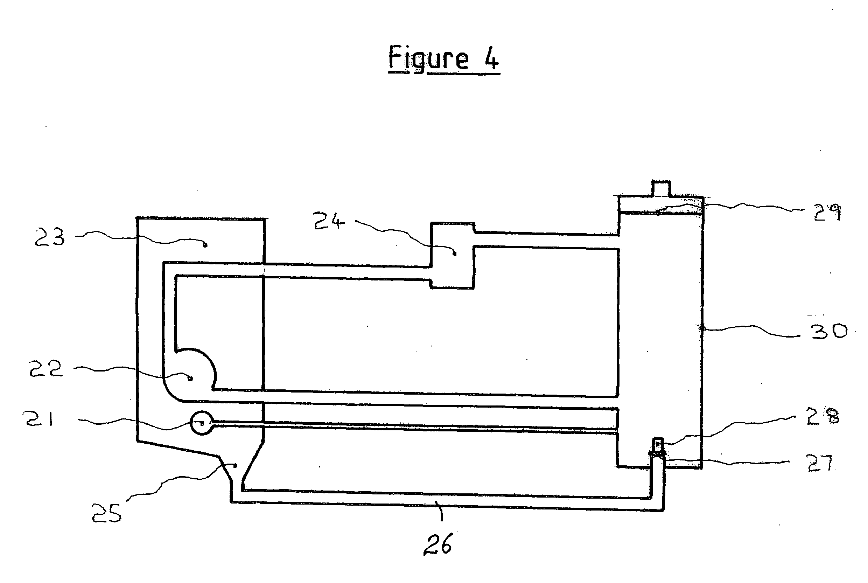

Figure 4 shows an oil reservoir 30 supplying an engine lubricant pump 21 and an engine coolant pump 22. After leaving the engine 23 the oil coolant enters a heat exchanger 24, if required, before returning to the reservoir 30. The oil fed to the lubricant pump 21 is circulated around the moving parts of the engine and returned by gravity to the engine sump 25. A return passage 26 links the engine sump to the oil reservoir via a one-way return valve 27 preloaded by a spring 28. Cyclic crankcase pressure is sufficient to open the return valve against the head of oil 29 in the reservoir and the spring 28. Such a return valve 27 facilitates a differential head of lubricant between the engine and the reservoir.

The use of a common coolant and lubricant media is beneficial in eliminating coolant corrosion and boiling issues and also allows cylinder lubrication and piston cooling to be more easily provided by the coolant circuit.

An engine using a disc drive mechanism in place of connecting rods is capable of complete dynamic balance and requires a much smaller crankcase volume. As a result the higher crankcase compression available with the disc drive construction may be exploited for enhanced engine performance.

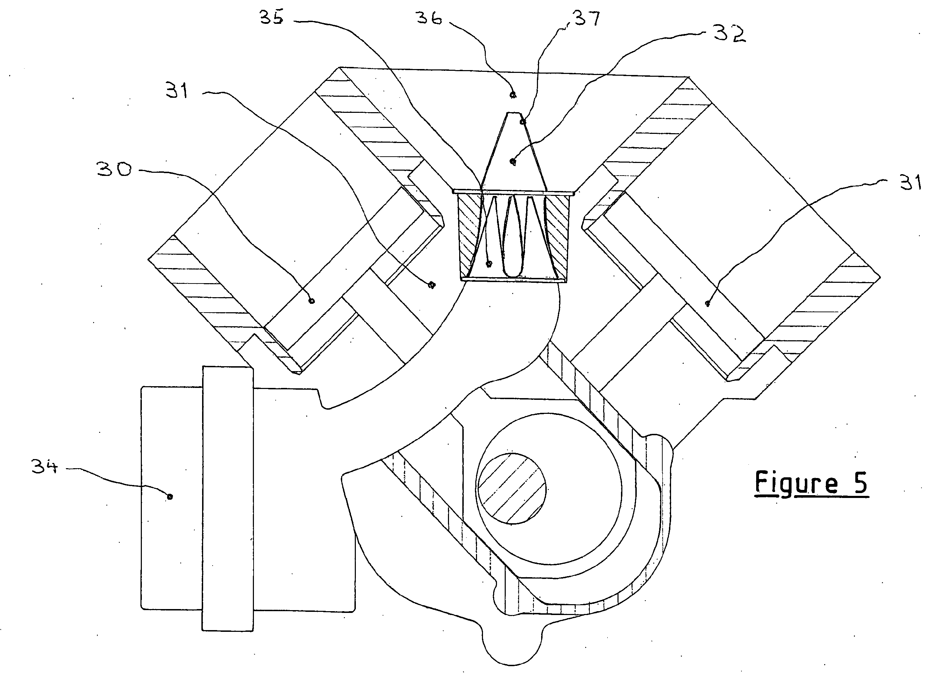

Figure 5 shows a stack arrangement of the crankcase intake and outlet reed valves that exploits inertial charging. Sinusoidal reciprocating motion of pistons 31 creates sinusoidal pressure fluctuation in the cavity 32 linked to crankcase volume 33, preferably via an oil separator (not shown). During increasing crankcase volume air is drawn through an air filter 34 and an inlet reed valve assembly 35 into the cavity 32. Decreasing crankcase volume then discharges air from the cavity 32 into an intake plenum 36 via an outlet reed valve assembly 37.

The cavity 32 and reed valve assemblies 35 and 37 have a depth greater than the depth of the crankcase volume 33. This enables intake air to be fed to the cavity 32 from either end of the inlet reed valve assembly 35 with minimal contact from the hotter crankcase air/oil mixture. The centre section of the cavity 32 has a signal pressure tract (not shown) connecting it to the crankcase. An oil separator (not shown) conditions the signal pressure flow to minimise carry-over of oil into the induction air.

## Claims

1. An internal combustion engine **characterized in that** it comprises a disc drive mechanism in which an intake valve (16) is provided leading to a crankcase chamber (10) to permit the supply of air to said chamber (10), a passage (14) leads from the crankcase chamber (10) to the cylinder(s) (15) of the engine and a one-way valve is provided in said passage (14) to permit compressed air to pass from the crankcase chamber (10) to the cylinder(s) (15) and to prevent the flow of air through said passage (14) in the opposite direction.

2. An engine according to claim 1, **characterized in that** the engine has more than one cylinder (15) and **in that** the passage (14) leads from the crankcase chamber (10) to all of said cylinders (15).

3. An engine according to claim 1, **characterized in that** the engine has more than one cylinder (15) and **in that** a separate passage is provided leading from the crankcase chamber (10) to each cylinder (15), a respective one-way valve being provided in each of said passages.

4. An engine according to any one of the preceding claims, **characterized in that** the or each cylinder (15) is provided with diagonally spaced engine exhaust valves (19) with tangential port orientation relative to the cylinder axis to create uni-directional macro-swirl in the cylinder (15) about the cylinder axis.

5. An engine according to claim 4, **characterized in that** the or each cylinder (15) is provided with diagonally spaced engine intake valves (16) in which one or more has a predominantly tangentially oriented port that compliments the in-cylinder uni-directional macro-swirl generated by the exhaust ports.

6. An engine according to any one of claims 1 to 3, **characterized in that** the or each cylinder (15) has multiple intake ports (18) in which the crankcase fed port comprising also the injected fuel is orientated to deliver the air/fuel mixture to the central zone of the cylinder (15) for combustion.

7. An engine according to any one of claims 1 to 3, **characterized in that** the or each cylinder (15) has diagonally positioned exhaust valves (19) and diagonally positioned inlet valves (16) with tangentially orientated ports that all create uni-directional in-chamber air motion predominantly around the cylinder axis.

8. An engine according to any one of the preceding claims, **characterized in that** the engine is arranged to have delayed opening of the crankcase fed intake valve (16) in the induction process in order to avoid unburnt fuel from entering the exhaust system.

9. An engine according to any one of the preceding claims, **characterized in that** means (30) are provided for storing engine lubricant outside the crankcase and **in that** a further one-way valve (27) is provided to create a differential head relative to the sump oil level.

10. An engine according to claim 9, **characterized in that** the means for storing engine lubricant comprise a reservoir (30) having a differential head of lubricant to that of the engine (23).

11. An engine according to claim 10, **characterized in that** the reservoir (30) is connected by a first passage to the intake of a coolant pump (22) which is effective to pump lubricant to the engine (23) for cooling purposes, the lubricant then being pumped to a heat exchanger (24) connected to the reservoir (30) by a second passage.

12. An engine according to claim 11, **characterized in that** the reservoir (30) is connected by a further passage to a lubricant pump (21) which is effective to pump lubricant to moving parts of the engine (23), said lubricant being returned by gravity to the sump (25) of the engine (23).

13. An engine according to claim 12, **characterized in that** the sump is connected to the reservoir (28) by a return passage (26), a spring-loaded return valve (27) being provided in said passage (26) and said valve (27) being arranged to be opened by pressure in the crankcase.

14. An engine according to any one of the preceding claims, charactaerized in that the engine has crankcase intake and outlet reed valve assemblies (35,37) that are stacked with provision for an enclosed valve cavity (32) to be connected to the crankcase volume (33) via a tract that may incorporate an air/oil separator.
